# EUROPÄISCHE PATENTSCHRIFT

(11) **EP 1 131 230 B1**
(45) Veröffentlichungstag und Bekanntmachung des Hinweises auf die Patenterteilung: **17.03.2004**
(21) Anmeldenummer: 99972167.3
(22) Anmeldetag: 28.09.1999
(51) Int. Cl.: B60R 21/32

(54) **VORRICHTUNG ZUM ERFASSEN DER BELEGUNG EINES FAHRZEUGSITZES MITTELS EINES STEREOSKOPISCHEN BILDAUFNAHMESENSORS**
DEVICE FOR DETECTING WHETHER A VEHICLE SEAT IS OCCUPIED BY MEANS OF A STEREOSCOPIC IMAGE RECORDING SENSOR
DISPOSITIF POUR DETECTER L'OCCUPATION D'UN SIEGE DE VEHICULE AU MOYEN D'UN CAPTEUR DE PRISE DE VUES STEREOSCOPIQUE

(30) Priorität: 16.11.1998 DE 19852653
(43) Veröffentlichungstag der Anmeldung: 12.09.2001
(73) Patentinhaber: ROBERT BOSCH GMBH, 70442 Stuttgart (DE)
(72) Erfinder: POECHMUELLER, Werner, D-31139 Hildescheim (DE)
(86) Internationale Anmeldenummer: PCT/DE1999/003111
(87) Internationale Veröffentlichungsnummer: WO 2000/029262

(56) Entgegenhaltungen:
- DE-A- 4 209 536
- DE-A- 19 741 393
- US-A- 5 398 185
- US-A- 5 737 083

## Beschreibung

### Stand der Technik

Die vorliegende Erfindung betrifft eine Vorrichtung zum Erfassen der Belegung eines Fahrzeugsitzes, wobei eine stereoskopische Bildaufnahmeeinrichtung mit mindestens einem optischen Sensor die Szene des Fahrzeugsitzes aufnimmt und daraus eine in mehrere Zonen aufgeteilte Tiefenkarte ableitet, die für jede Zone den Abstand gegenüber einem Referenzpunkt angibt.

Untersuchungen, z. B. durch die NHTSA (National Highway Trafic Safety Administration) in den U.S.A., haben ergeben, daß Kinder, die auf dem Beifahrersitz des Fahrzeugs insbesondere in einem rückwärts gerichteten Kindersitz saßen, durch Auslösen des Airbags tödliche Verletzungen erlitten haben. Überhaupt geht von einem auslösenden Airbag eine Verletzungsgefahr für eine Person auf einem Fahrzeugsitz aus, wenn diese auf Grund ihrer Sitzposition oder ihrer Körpergröße oder durch Vorbeugen unmittelbar vor Eintritt des Unfalls in Richtung des Airbags einen zu geringen Abstand zu dem Airbag hat. Es gibt Belegungssituationen gerade des Beifahrersitzes, in denen der Airbag besser gar nicht ausgelöst werden sollte. Zu solchen Belegungssituationen gehört z. B. die Belegung des Fahrzeugsitzes mit einem Kindersitz oder die Ablage von nicht zu schützenden Gegenständen oder ein viel zu geringer Abstand eines Insassen gegenüber dem Airbag. Zukünftig eingesetzte intelligente Airbagsysteme sollen in der Lage sein, die Aufblasstärke des Airbags an die Größe und die Sitzposition des jeweiligen Fahrzeuginsassen anzupassen.

Es zeigt sich also, daß es für die Auslösesteuerung des Airbags unumgänglich ist, die Belegung des Fahrzeugsitzes zu erfassen, um ein unnützes oder ein die Person auf dem Fahrzeugsitz gefährdendes Auslösen des Airbags zu vermeiden. Es gibt bereits verschiedenartige Vorrichtungen zur Sitzbelegungserkennung. Eine gattungsgemäße Vorrichtung zum Erfassen der Belegung eines Fahrzeugsitzes mit einem stereoskopischen Bildaufnahmesystem ist aus der DE 197 41 393 A1 bekannt. Mit einer solchen stereoskopischen Bildaufnahmeeinrichtung können mit Hilfe des bekannten Triangulationverfahrens Abstände des nach Zonen aufgeteilten Fahrzeugsitzbereiches gegenüber einem Referenzpunkt ermittelt werden. Es entsteht dabei eine sogenannte aus mehreren Zonen bestehende Tiefenkarte, aus der sich mit hoher Genauigkeit ablesen läßt, ob und wie der Fahrzeugsitz belegt ist oder welche Sitzposition ein darauf befindlicher Fahrzeuginsasse momentan eingenommen hat. Diese Information kann nun zur Steuerung von Rückhalteeinrichtungen, wie Airbags oder Gurtstraffer, eingesetzt werden.

Die Genauigkeit einer von einer Bildaufnahmeeinrichtung erstellten Tiefenkarte hängt sehr stark von der Bildaufnahmequalität der optischen Sensoren ab. Auf die Bildqualität haben die Szenenbeleuchtungsverhältnisse einen starken Einfluß. Gerade im Kraftfahrzeug treten sehr extreme Beleuchtungsverhältnisse auf. Dies liegt zum einen daran, daß sich das Kraftfahrzeug in freier Umgebung befindet. Somit sind unterschiedlichste Beleuchtungsverhältnisse möglich - Tag, Nacht, tiefstehende und blendende Sonne, blendende Scheinwerfer anderer Fahrzeuge etc.. Außerdem kann sich ein Fahrzeug sehr schnell bewegen, so daß sich die Beleuchtungsverhältnisse in sehr kurzen Zeiträumen stark ändern (z. B. beim Einfahren in einen abgeschatteten Bereich, beim Verlassen eines Tunnels und dergleichen). Lineare optische Sensoren, wie sie gemäß der DE 197 41 393 A1 für die Sitzbelegungserkennung eingesetzt werden, zeigen eine sehr große Abhängigkeit von Helligkeitsveränderungen der aufgenommenen Szene. Um die im Fahrzeug auftretende hohe Helligkeitsdynamik möglichst weitgehend zu reduzieren, ist gemäß der DE 197 41 393 A1 eine starke Lichtquelle zur Beleuchtung der betrachteten Szene erforderlich.

Aus der US-A-5 737 083 ist ein optisches Sensorsystem zur Erfassung des Objekts auf dem Fahrzeugsitz bekannt, bei dem Infrarotlicht verwendet wird.

Der Erfindung liegt nun die Aufgabe zugrunde, eine Vorrichtung der eingangs genannten Art anzugeben, die trotz hoher Helligkeitsdynamik auch ohne Einsatz einer sehr starken Lichtquelle die Art der Belegung eines Fahrzeugsitzes zuverlässig erfaßt.

### Vorteile der Erfindung

Die genannte Aufgabe wird mit den Merkmalen des Anspruchs 1 dadurch gelöst, daß der mindestens eine optische Sensor, aus dem die stereokopische Bildaufnahmeeinrichtung besteht, eine den Zusammenhang zwischen der einfallenden Lichtstärke und seinem elektrischen Ausgangssignal beschreibende, nicht lineare Wandlerkennlinie aufweist, deren Kennliniensteilheit mit zunehmender Lichtstärke abnimmt. Ein solcher nichtlinearer optischer Sensor ist in der Lage, auch bei einer hohen Helligkeitsdynamik die Szene des Fahrzeugsitzes mit hoher Auflösung aufzunehmen, wobei für die Szenenausleuchtung eine nur wenig aufwendige Lichtquelle erforderlich ist.

Erfindungsgemäß ist eine Lichtquelle zur Ausleuchtung der Szene des Fahrzeugsitzes vorhanden, die synchron mit der Aktivierung der Bildaufnahmeeinrichtung Licht ausstrahlt, wobei die Lichtquelle für die Fahrzeuginsassen unsichtbares Licht im Infrarotbereich ausstrahlt.

Vorteilhafte Weiterbildungen der Erfindung gehen aus den Unteransprüchen hervor.

Besonders geeignet zur Aufnahme von Szenen mit sehr hoher Helligkeitsdynamik sind optische Sensoren, deren Wandlerkennlinie einen logarithmischen Verlauf hat.

Für die Realisierung einer stereoskopischen Bildaufnahmeeinrichtung können entweder mit definiertem Abstand zueinander angeordnete optische Sensoren oder eine Stereooptik vorgesehen werden, die zwei um einen definierten Abstand gegeneinander versetzte Bilder des Fahrzeugsitzes auf einem einzigen optischen Sensor abbildet.

Um störendes Streulicht von der Bildaufnahmeeinrichtung fernzuhalten, ist vorzugsweise unmittelbar vor dem mindestens einen optischen Sensor ein Infrarot-Bandpassfilter angeordnet, dessen Durchlaßbereich innerhalb des lichtempfindlichen Bereichs des optischen Sensors liegt.

### Zeichnung

Anhand mehrerer in der Zeichnung dargestellter Ausführungsbeispiele wird nachfolgend die Erfindung näher erläutert. Es zeigen:
Figur 1 ein Fahrzeug mit einer stereoskopischen Bildaufnahmeeinrichtung,
Figur 2 eine stereoskopische Bildaufnahmeeinrichtung mit zwei optischen Sensoren,
Figur 3 eine stereoskopische Bildaufnahmeeinrichtung mit einem optischen Sensor,
Figur 4 eine nicht lineare Wandlerkennlinie eines optischen Sensors,
Figur 5a eine Tiefenkarte eines nicht belegten Fahrzeugsitzes und
Figur 5b eine Tiefenkarte eines belegten Fahrzeugsitzes.

### Beschreibung von Ausführungsbeispielen

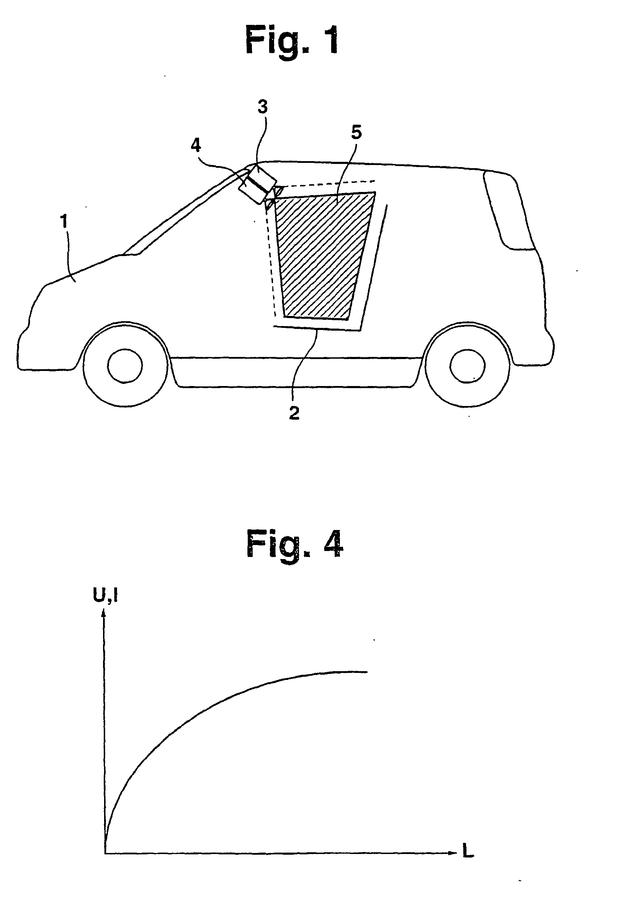

In der Figur 1 ist schematisch ein Fahrzeug 1 mit einem Fahrzeugsitz 2, beispielsweise einem Beifahrersitz, dargestellt. Im Bereich des Dachhimmels des Fahrzeugs 1 ist eine stereoskopische Bildaufnahmeeinrichtung, bestehend aus zwei optischen Sensoren 3 und 4, angeordnet, mit der die Szene des Fahrzeugsitzes 2 aufgenommen wird. Die beiden optischen Sensoren 3 und 4 nehmen zwei um einen definierten Abstand gegeneinander versetzte, in der Zeichnung durch strichlierte Begrenzungslinien angedeutete Bildausschnitte auf. Die beiden Bildausschnitte bilden einen Überlappungsbereich 5 (schraffierter Bereich), der genau den Raum des Fahrzeugsitzes abdeckt, in dem sich eine Person oder ein anderes Objekt auf dem Fahrzeugsitz aufhalten kann. Mit einer solchen stereoskopischen Bildaufnahmeeinrichtung kann man, wie aus der DE 197 41 393 A1 hervorgeht, mit Hilfe bekannter Triangulationsverfahren die Abstände von Bildausschnitten gegenüber einem Referenzpunkt (z. B. Ort der optischen Sensoren oder Ort der Airbagabdeckung) ermitteln.

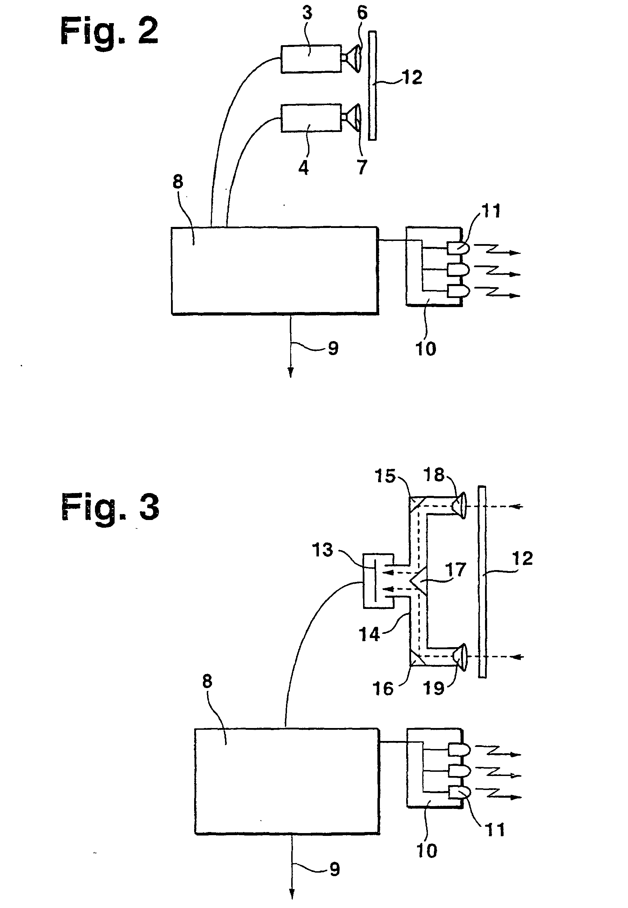

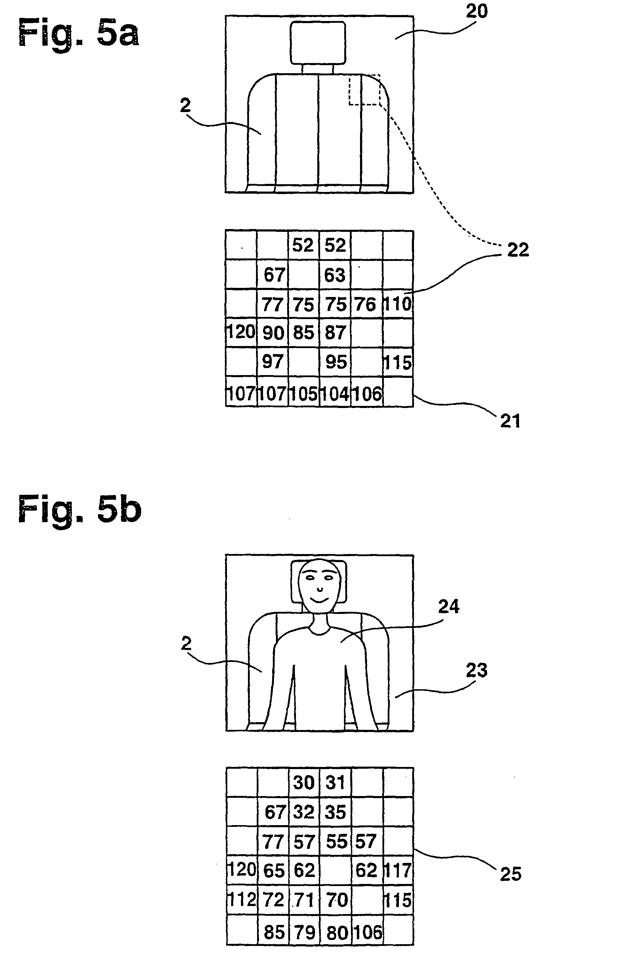

Die in Figur 2 dargestellte stereoskopische Bildaufnahmeeinrichtung besteht, wie auch in Figur 1 gezeigt, aus zwei in einem definierten Abstand zueinander angeordneten optischen Sensoren 3 und 4. Für eine geeignete Strahlformung sind vor den optischen Sensoren 3 und 4 Linsen 6 und 7 angeordnet. Die Ausgangssignale der beiden optischen Sensoren 3 und 4 werden einem Bildverarbeitungsprozessor 8 zugeführt, der, wie noch im Zusammenhang mit den Figuren 5a und 5b näher erläutert wird, aus den aufgenommenen Bildern eine Tiefenkarte vom Fahrzeugsitz ableitet und die sich daraus ergebende Sitzbelegung über ein Ausgangssignal 9 einem nicht dargestellten Steuergerät für Rückhalteeinrichtungen mitteilt. Das Steuergerät kann dann entsprechend der Information 9 die Auslösung eines oder mehrerer Airbags und Gurtstraffer steuern.

Es ist eine Lichtquelle 10 vorgesehen, welche die Szene des Fahrzeugsitzes ausleuchtet. Die Lichtquelle 10 besitzt z. B. mehrere Infrarotlicht abstrahlende Leuchtdioden 11. Der Bildverarbeitungsprozessor 8 schaltet die Lichtquelle 10 synchron mit den Bildsensoren 3 und 4 ein. Die Lichtquelle 10 ist also nur dann aktiv, wenn die optischen Sensoren 3 und 4 für eine Bildaufnahme eingeschaltet sind. Somit läßt sich die mittlere abgestrahlte Lichtleistung möglichst gering halten, wobei zum Aufnahmezeitpunkt die Szene mit ausreichender Helligkeit ausgeleuchtet ist. Die Aufnahme von Störstrahlung durch die optischen Sensoren 3 und 4 kann dadurch verhindert werden, daß vor den Sensoren 3 und 4 ein Infrarot-Bandpassfilter 12 eingesetzt wird, das auf den von der Lichtquelle 10 abgegebenen Spektralbereich abgestimmt ist.

Wie in der Figur 3 dargestellt, kann an Stelle von zwei optischen Sensoren auch nur ein einziger optischer Sensor 13 eingesetzt werden, auf dem über eine Stereooptik 2 um einen definierten Abstand gegeneinander versetzte Bilder des Fahrzeugsitzes abgebildet werden. Die Stereooptik weist zwei Strahlengänge mit darin angeordneten Umlenkelementen 15, 16 und 17 auf, wobei an den Eingängen der Stereooptik Linsen 18 und 19 angeordnet sind. Die von den beiden gegeneinander versetzten Strahlengängen der Stereooptik aufgenommenen Strahlen treffen im optischen Sensor 13 auf nebeneinander liegende getrennte Sensorzonen. Ein Sensor nimmt hier also zwei Bilder auf, die genau so wie bei dem Ausführungsbeispiel gemäß Figur 2 in dem Bildverarbeitungsprozessor 8 ausgewertet werden.

Die optischen Sensoren 3, 4, 13 haben eine in Figur 4 dargestellte Wandlerkennlinie, welche den Zusammenhang zwischen der einfallenden Lichtstärke L und dem elektrischen Ausgangssignal (Spannung U oder Strom I) beschreibt. Die Wandlerkennlinie hat einen derartigen nichtlinearen Verlauf, daß mit zunehmender Lichtstärke ihre Kennliniensteilheit abnimmt. Ein optischer Sensor mit einer solchen nichtlinearen Wandlerkennlinie ist aus der DE 42 09 536 C2 bekannt. Wegen des nichtlinearen Verlaufs der Wandlerkennlinie wandeln die optischen Sensoren 3, 4, 13 Lichtsignale mit hoher Helligkeitsdynamik in eine reduzierte Ausgangssignaldynamik um. Dadurch wird der Kontrast der optischen Sensoren 3, 4, 13 nahezu unabhängig von der Beleuchtungsstärke konstant. Mit solchen optischen Sensoren, die eine nichtlineare, vorzugsweise logarithmische, Wandlerkennlinie haben, ist selbst bei hohen Lichtintensitätsschwankungen eine hochauflösende Aufnahme der Szene des Fahrzeugsitzes möglich.

Im oberen Teil der Figur 5a ist ein von der Bildaufnahmeeinrichtung aufgenommener Bildausschnitt 20 des Fahrzeugsitzes 2 dargestellt. Darunter ist eine von dem Bildverarbeitungsprozessor 8 aus den beiden aufgenommenen Bildern abgeleitete Tiefenkarte 21 dargestellt. In dieser Tiefenkarte 21 ist der gesamte Bildausschnitt in mehrere Zonen aufgeteilt. Den Zonen sind Zahlen zugeordnet, welche den Abstand der betreffenden Bildzone gegenüber einem Referenzpunkt angeben. Je größer der Zahlenwert ist, desto weiter ist der Abstand der betreffenden Bildzone vom Referenzpunkt entfernt. Beispielsweise hat die Zone 22 einen Abstandswert von 76. Manche Zonen sind deshalb nicht mit einer Zahl versehen, weil der Bildverbeitungsprozessor hierfür keinen eindeutigen Abstandswert ermitteln konnte.

Im oberen Teil der Figur 5b ist ein Bildausschnitt 23 des mit einer Person 24 belegten Fahrzeugsitzes 2 dargestellt. Darunter ist die von dem Bildverarbeitungsprozessor 8 ermittelte Tiefenkarte 25. Ein Vergleich der Tiefenkarte 21 des nicht belegten Fahrzeugsitzes mit der Tiefenkarte 25 des belegten Fahrzeugsitzes macht deutlich, daß mit der beschriebenen Bildaufnahmeeinrichtung eine eindeutige Information über die Sitzposition einer den Fahrzeugsitz belegenden Person gewonnen werden kann. Die Tiefenkarte gibt auch eindeutige Information darüber, ob der Sitz überhaupt belegt ist, ob sich auf ihm ein Kindersitz befindet, ob es sich um eine kleine oder große Person auf dem Fahrzeugsitz handelt oder ob der Fahrzeugsitz gar nicht mit einem Kindersitz oder einer Person besetzt ist, sondern ob ein anderer Gegenstand auf ihm abgelegt ist.

## Patentansprüche

1. Vorrichtung zum Erfassen der Belegung eines Fahrzeugsitzes, wobei eine stereoskopische Bildaufnahmeeinrichtung mit mindestens einem optischen Sensor (3, 4, 13) die Szene des Fahrzeugsitzes (2) aufnimmt und daraus eine in mehrere Zonen aufgeteilte Tiefenkarte (21, 25) ableitet, die für jede Zone den Abstand gegenüber einem Referenzpunkt angibt, **dadurch gekennzeichnet, dass** der mindestens eine optische Sensor (3, 4, 13) eine den Zusammenhang zwischen der einfallenden Lichtstärke (L) und seinem elektrischen Ausgangssignal (U, I) beschreibende, nichtlineare Wandlerkennlinie im gesamten Arbeitsbereich aufweist, deren Kennliniensteilheit mit zunehmender Lichtstärke (L) abnimmt, dass eine Lichtquelle (10) zur Ausleuchtung der Szene des Fahrzeugsitzes (2) vorhanden ist, die synchron mit der Aktivierung der Bildaufnahmeeinrichtung (3, 4, 13) Licht ausstrahlt und dass die Lichtquelle (10) Licht im Infrarotbereich ausstrahlt.

2. Vorrichtung nach Anspruch 1, **dadurch gekennzeichnet, dass** die Wandlerkennlinie einen logarithmischen Verlauf hat.

3. Vorrichtung nach Anspruch 1, **dadurch gekennzeichnet, dass** zwei mit definiertem Abstand zueinander angeordnete optische Sensoren (3, 4,) gleichzeitig die Szene des Fahrzeugsitzes (2) aufnehmen.

4. Vorrichtung nach Anspruch 1, **dadurch gekennzeichnet, dass** eine Stereooptik (14) zwei um einen definierten Abstand gegeneinander versetzte Bilder des Fahrzeugsitzes (2) auf einem einzigen optischen Sensor (13) abbildet.

5. Vorrichtung nach Anspruch 1, **dadurch gekennzeichnet, dass** vor dem mindestens einen optischen Sensor (3, 4, 13) ein Infrarot-Bandpassfilter (12) angeordnet ist.

## Claims

1. Device for detecting the occupancy of a vehicle seat, a stereoscopic image recording device having at least one optical sensor (3, 4, 13) recording the scene of the vehicle seat (2) and deriving therefrom a depth chart (21, 25) which is subdivided into a plurality of zones and specifies the distance from a reference point for each zone, **characterized in that** the at least one optical sensor (3, 4, 13) has in the overall operating range a nonlinear converter characteristic which describes the relationship between the incident luminosity (L) and its electric output signal (U, I), and whose gradient decreases with increasing luminosity (L), **in that** there is present for illuminating the scene of the vehicle seat (2) a light source (10) which emits light synchronously with the activation of the image recording device (3, 4, 13), and **in that** the light source (10) emits light in the infrared region.

2. Device according to Claim 1, **characterized in that** the converter characteristic has a logarithmic profile.

3. Device according to Claim 1, **characterized in that** two optical sensors (3, 4) arranged at a defined spacing from one another simultaneously record the scene of the vehicle seat (2).

4. Device according to Claim 1, **characterized in that** a stereoscopic optical system (14) projects two images, mutually offset by a defined spacing, of the vehicle seat (2) on a single optical sensor (13).

5. Device according to Claim 1, **characterized in that** an infrared bandpass filter (12) is arranged in front of the at least one optical sensor (3, 4, 13).

## Revendications

1. Dispositif pour détecter qu'un siège de véhicule est occupé, avec lequel une installation de prise de vue stéréoscopique comportant au moins un capteur optique (3, 4, 13) prend une scène du siège de véhicule (2) et en dérive une carte des profondeurs (21, 25) séparée en plusieurs zones et qui indique pour chaque zone l'écart par rapport à un point de référence,
**caractérisé en ce que**
le capteur optique (3, 4, 13) au moins au nombre d'un présente dans toute la zone d'action une courbe caractéristique non linéaire de capteur qui décrit la relation entre l'intensité lumineuse (L) incidente et son signal électrique de sortie (U, I) et dont la pente de courbe caractéristique diminue lorsque l'intensité lumineuse (L) augmente, avec une source lumineuse (10) qui sert à éclairer la scène du siège de véhicule (2) et qui émet de la lumière en synchronie avec l'activation de l'installation de prise de vue (3, 4, 13) la source lumineuse (10) émettant dans le domaine des infrarouges.

2. Dispositif selon la revendication 1,
**caractérisé en ce que**
la courbe caractéristique de capteur a un tracé logarithmique.

3. Dispositif selon la revendication 1,
**caractérisé en ce que**
deux capteurs optiques (3, 4) disposés selon un écart mutuel défini enregistrent en même temps la scène du siège de véhicule (2).

4. Dispositif selon la revendication 1,
**caractérisé en ce qu'**
une optique stéréoscopique (14) reproduit sur un seul capteur optique (13) deux images du siège de véhicule (2) qui sont décalées l'une par rapport à l'autre selon un écart défini.

5. Dispositif selon la revendication 1,
**caractérisé en ce qu'**
un filtre passe-bande à infrarouge et au moins un est disposé devant le capteur optique (3, 4, 13).
